# EUROPÄISCHE PATENTSCHRIFT

(11) **EP 1 787 894 B1**
(45) Veröffentlichungstag und Bekanntmachung des Hinweises auf die Patenterteilung: **14.10.2009**
(21) Anmeldenummer: 06019121.0
(22) Anmeldetag: 13.09.2006
(51) Int. Cl.: B62D 21/11

(54) **Hilfsrahmen für ein Kraftfahrzeug**
Subframe for a motor vehicle
Cadre auxiliaire de véhicule automobile

(30) Priorität: 22.11.2005 DE 102005055978
(43) Veröffentlichungstag der Anmeldung: 23.05.2007
(73) Patentinhaber: Benteler Automobiltechnik GmbH, 33104 Paderborn (DE)
(72) Erfinder: Stolle, Jens, 33758 Schloß Holte-Stukenbrock (DE); Kunisch, Marc, 59872 Meschede (DE); Krolo, Mario, 33803 Steinhagen (DE); Roxel, Andreas, 59329 Wadersloh (DE); Voigt, Dirk, 33184 Altenbeken (DE); Kramer, Tobias, Dipl.-Ing., 85134 Stammham (DE)
(74) Vertreter: Griepenstroh, Jörg

(56) Entgegenhaltungen:
- EP-A- 1 690 779
- DE-A1- 3 942 794
- DE-A1- 19 822 731

## Beschreibung

Die Erfindung betrifft einen Hilfsrahmen (auch Achsträger oder Fahrschemel) für ein Kraftfahrzeug mit den Merkmalen des Patentanspruchs 1.

Hilfsrahmen dienen zur Aufnahme von Komponenten des Fahrwerks und/oder des Antriebsaggregats des Fahrzeugs und kommen primär bei Personenkraftwagen zum Einsatz. Derartige Hilfsrahmen steifen die Vorder- oder auch Hinterwagenstruktur aus und sind hierzu mit der Karosserie des Fahrzeugs fest verbunden. Die Steifigkeit eines solchen Hilfsrahmens ist von besonderer Bedeutung, da an dem Hilfsrahmen auch Lenker des Fahrwerks gewöhnlich elastisch gelagert sind, wobei die akustische Entkopplung über eine hohe Anbindsteifigkeit an den Lenkeranbindpunkten und einen Steifigkeitssprung im Lenkerlager verbessert wird. An einem Hilfsrahmen greifen während des normalen Fahrbetriebs folglich hohe statische als auch dynamische Kräfte an. Es handelt sich daher um relativ komplexe Bauteile, an die zunehmend höhere Anforderungen gestellt werden, zumal nicht nur das Deformationsverhalten im Hinblick auf einen Crash optimiert werden muss, sondern weil zudem auch eine besonders leichte und gleichzeitig biege- und verwindungssteife Konstruktion gewünscht wird.

Durch die EP 0 941 912B1 zählt ein Kraftfahrzeug mit einem flächigen Versteifungselement zum Stand der Technik, das sich in Fahrtrichtung betrachtet vor und hinter den Lagerböcken zur Aufnahme eines Lenkers des Fahrwerks erstreckt. Wenn an jedem Längsträger des Hilfsrahmens mehrere Lenkeranbindungen vorhanden sind, muss ein sehr großes flächiges Versteifungselement eingesetzt werden, was Gewichtsnachteile mit sich bringen kann.

Durch die DE 199 59 607 A1 ist eine Fahrzeugkarosserie mit einer bodenseitigen Verstrebungsanordnung bekannt, wobei die Verstrebungsanordnung mit einem Ende an in Fahrzeugquerrichtung voneinander beabstandeten Punkten an dem Hilfsrahmen und mit dem anderen Ende an einem Verbindungsabschnitt des Querträgers befestigt ist. Dies führt zwar insgesamt zu einer Verbesserung der Steifigkeit, allerdings können bei dieser Konfiguration die Steifigkeiten in Lenkeranbindungspunkten des Hilfsrahmens nicht gezielt verbessert werden.

Aus der nachveröflentlichten EP 1 690 779 A1 ist ein Hilfsrahmen für Kraftfahrzeuge bekannt, mit im Wesentlichen in Fahrtrichtung verlaufenden linken und rechten Längsträgern und mit einem die Längsträger verbindenden Querträger. Jeder Längsträger weist eine in Fahrtrichtung hinter dem Querträger angeordnete vordere Lenkeranbindung und eine hintere Lenkeranbindung auf. Die Längsträger sind über ein Strebenkreuz miteinander verbunden, wobei sie sich kreuzenden Diagonalstreben des Strebenkreuzes bezogen auf die Fahrtrichtung in Höhe der vorderen Lenkeranbindung mit den Längsträgern und im Hinblick auf die hinteren Lenkeranbindungen vor diesen mit den jeweils gegenüberliegenden Längsträgern verbunden sind.

Durch die DE3942794 A1 ist ein Hilfsrahmen mit linken und rechten Längsträgern und mit vorderen und hinteren Lenkeranbindungen bekannt, wobei die Längsträger über ein Strebenkreuz miteinander verbunden sind.

Der Erfindung liegt die Aufgabe zugrunde, einen Hilfsrahmen für ein Kraftfahrzeug aufzuzeigen, bei welchem in möglichst leicht bauender Weise die Steifigkeiten insbesondere in Bereichen der Lenkeranbindungspunkte erhöht werden.

Diese Aufgabe ist bei einem Hilfsrahmen mit den Merkmalen des Patentanspruchs 1 gelöst.

Vorteilhafte Ausgestaltungen des Erfindungsgedankens sind Gegenstand der Unteransprüche.

Wesentlich bei dem erfindungsgemäßen Hilfsrahmen ist, dass die Längsträger über ein Strebenkreuz miteinander verbunden sind, wobei das Strebenkreuz zwei sich kreuzende Diagonalstreben aufweist, die in Fahrtrichtung gesehen zum einen in der Höhe der vorderen Lenkeranbindungen mit den Längsträgern verbunden sind und zum anderen in Fahrtrichtung hinter den hinteren Lenker mit den jeweils gegenüber liegenden Längsträgern verbunden sind. Diese fachwerkartige Aussteifung durch das Strebenkreuz führt zu einer signifikanten Verbesserung der Quersteifigkeit in den Lenkeranbindungspunkten bei gleichzeitig sehr geringem Materialeinsatz. Durch Verwendung sehr schlanker und leichter Streben können Verwindungen des Hilfsrahmens und damit Spannungsspitzen in dem Hilfsrahmen in erheblichem Umfang reduziert werden. Der gesamte Vorderwagenbereich des Kraftfahrzeugs erfährt eine zusätzliche Aussteifung. Zudem ist der erfindungsgemäße Hilfsrahmen mit dem zusätzlichen Strebenkreuz leicht montierbar. Vor allem wird die Fahrdynamik eines mit einem solchen Hilfsrahmen ausgestatteten Kraftfahrzeugs verbessert.

Ein Hilfsrahmen, bei welchem jeder Längsträger einen vorderen und einen hinteren Gussknoten aufweist, wird als fertigungstechnisch besonders günstig angesehen. Die vorderen und hinteren Enden der Längsträger sind relativ komplexe Bauteile, die sich fertigungstechnisch am einfachsten im Gießverfahren herstellen lassen. Jeder Gussknoten besitzt eine Lenkeranbindung sowie entsprechende Anschraubpunkte zur Befestigung des Hilfsrahmens an der Karosserie des Kraftfahrzeugs. Die Anschraubpunkte der Längsträger liegen sowohl beim vorderen Gussknoten als auch beim hinteren Gussknoten in Fahrtrichtung betrachtet hintereinander, können aber jeweils in Fahrzeugquerrichtung betrachtet zueinander versetzt angeordnet sein. Im Rahmen der Erfindung ist es wichtig, dass die Anbindung der Diagonalstrebe am hinteren Gussknoten sehr nahe bei den Anschraubpunkten des Hilfsrahmens an die Karosserie erfolgt. Dadurch wird erreicht, dass die von dem Rad auf den Lenker übertragenen Kräfte nicht allein in den Hilfsrahmen eingeleitet werden, sondern über die Diagonalstreben des Strebenkreuzes in die gegenüber liegenden Längsträger eingeleitet werden. Der Kraftfluss innerhalb des Hilfsrahmens wird wesentlich verbessert, was auf die hohe Eigensteifigkeit des hinteren Gussknotens in Kombination mit dem Strebenkreuz zurückzuführen ist. Der Kraftfluss ist besonders günstig, wenn der Befestigungspunkt der Diagonalstrebe in Fahrtrichtung gesehen zwischen den Anschraubpunkten des Hilfsrahmens liegt.

Die vorderen Gussknoten sind über einen Querträger miteinander verbunden. Der Querträger verläuft vorzugsweise in Fahrtrichtung gesehen zwischen den Anschraubpunkten des Hilfsrahmens, wobei die Lenkeranbindungen des vorderen Gussknotens im Abstand zu dem Querträger liegen, das heißt sie sind in Fahrtrichtung nach hinten versetzt. Dennoch werden über die Lenkeranbindungen hohe Kräfte in den Hilfsrahmen eingeleitet. Die Anschraubpunkte des Hilfsrahmens befinden sich zudem allerdings in relativ großem Abstand zu den Lenkeranbindungen. Um bei dieser ungünstigen Konstellation eine gewünschte hohe Steifigkeit im Bereich der Lenkeranbindung zu realisieren, ist bei der Erfindung ein Befestigungspunkt der Strebe in unmittelbarer Nähe der Lenkeranbindung platziert und liegt daher in Fahrtrichtung gesehen hinter dem Querträger und auch hinter den Anschraubpunkten des Hilfsrahmens.

Zusätzlich kann das Strebenkreuz eine Querstrebe umfassen, die in Fahrtrichtung gesehen in der Höhe der vorderen Lenkerstrebe parallel zum Querträger verläuft. Durch die unmittelbare Kopplung derjenigen Bereiche, in denen die vorderen Lenkeranbindungen platziert sind, können bei Kurvenfahrt Kräfte vom kurvenäußeren Rad unmittelbar über die Querstrebe auf den kurveninnenseitigen Längsträger des Hilfsrahmens und damit auf das Fahrwerk des anderen Rads der Achse übertragen werden. Dadurch verbessern sich die Fahreigenschaften.

Darüber hinaus wird es als zweckmäßig angesehen, die Diagonalstreben sowie die Querstrebe als reine Zug-/Druckstäbe auszubilden, die möglichst keiner Biegebeanspruchung unterliegen sollen. Daher ist vorgesehen, dass die Diagonalstreben und insbesondere auch die Diagonalstreben zusammen mit der Querstrebe in einer gemeinsamen räumlichen Ebene verlaufen. Das heißt, die Diagonalstreben besitzen möglichst keine Auskragungen oder Abwinklungen, die zu einer Umlenkung des Kraftflusses und zu Biegemomenten führen würden. Dadurch, dass die Diagonalstreben und die Querstrebe im Wesentlichen gerade verlaufen, können diese sehr schlank ausgeführt werden. Um die notwendige Biegesteifigkeit zu besitzen, handelt es sich bei den Diagonalstreben ebenso wie bei der Querstrebe vorzugsweise um Hohlprofile. Bei den Hohlprofilen spielt der Querschnitt eine untergeordnete Rolle. Es kann sich also um ein Rohr, aber auch um ein Kastenprofil handeln. Die Streben können einstückig ausgebildet sein oder auch aus einer oberen und unteren Halbschale zusammengesetzt sein. Die Schalen können mittels geeigneter Verbindungsverfahren miteinander gekoppelt sein. Die Ober- und die Unterschale sind vorzugsweise durch stoffschlüssige Verbindungsverfahren aneinander fixiert, wie z.B. Kleben oder Schweißen. Auch formschlüssige Verbindungen sind denkbar, die allein oder zusätzlich zu einer Verschweißung vorgesehen sein können.

Grundsätzlich sollen die Diagonalstreben ebenso wie die Querstrebe so kurz wie möglich ausgeführt sein, um die Knickgefahr zu minimieren. Da die theoretische Knicklänge von der Art der Einspannung abhängt, kann je nach Anwendungsfall vorgesehen sein, die Enden der Streben gelenkig zu lagern oder auch fest einzuspannen. Wenn die Enden gelenkig gelagert sind, handelt es sich um eine so genannte Pendelstütze, bei welcher die Knicklänge der Länge der Pendelstütze, das heißt der Länge der jeweiligen Strebe entspricht. Eine solche Pendelstütze lässt sich dadurch realisieren, dass die Streben an ihren Befestigungspunkten Lagerhülsen aufweisen, durch welche zur Montage Befestigungsbolzen gesteckt werden.

Eine zusätzliche Aussteifung können die Diagonalstreben auch dadurch erfahren, dass sie im Kreuzungspunkt miteinander verbunden sind und gegebenenfalls über ein zusätzliches Knotenelement ausgesteift werden. Die Diagonalstreben können hierzu aus einem Profilbauteil hergestellt sein, das sich durchgängig vom vorderen Gussknoten zum hinteren Gussknoten des anderen Längsträgers erstreckt. Grundsätzlich können die Diagonalstreben aber auch aus mehreren Strebenabschnitten zusammengesetzt sein, wobei die einzelnen Strebenabschnitte im Kreuzungspunkt miteinander verbunden, insbesondere miteinander verschweißt werden. Wenn die Diagonalstreben sich durchgängig zwischen den Befestigungspunkten erstrecken, sind aufgrund des Erfordernisses, dass die Diagonalstreben in einer Ebene verlaufen sollen, im Kreuzungspunkt teilweise Aussparungen im Querschnitt der Diagonalstrebe vorgesehen.

Die Diagonalstreben durchdringen sich gewissermaßen. Aufgrund der hieraus resultierenden Querschnittsreduzierung kann ein Knotenblech zur zusätzlichen Aussteifung erforderlich werden. Das Knotenblech dient aber insbesondere dazu, Biegungen der Diagonalstreben in horizontaler Richtung, wie sie bei einer parallelogrammartigen Verschiebung des Hilfsrahmens auftreten würden, zu verhindern. Da der Kreuzungspunkt der Diagonalstreben aufgrund der langen und schlanken Bauweise relativ klein ist, können im Kreuzungspunkt keine größeren Momente zwischen den sich kreuzenden Diagonalstreben übertragen werden. Um die Biegesteifigkeit im Kreuzungspunkt zu verbessern, ist das Knotenblech vorgesehen.

Aufgrund der hohen Verwindungssteifigkeit des erfindungsgemäßen Hilfsrahmens ist es nicht erforderlich, die Längsträger auf ihrer gesamten Länge als Gussbauteile auszugestalten. Vielmehr ist es zweckmäßig, lediglich die komplexen vorderen und hinteren Endabschnitte in Gussbauweise zu fertigen und diese durch ein Rohrprofil miteinander zu verbinden. Ein solches Rohrprofil kann eine geringere Wandstärke und damit ein geringeres Gewicht aufweisen als ein Gussbauteil. Die zusätzliche Abstützung der hinteren Gussknoten führt dazu, dass der Bereich zwischen den Gussknoten geringeren Biegebelastungen quer zur Fahrtrichtung unterliegt. Dies ist insbesondere dann der Fall, wenn auch die hinteren Gussknoten über eine weitere Querstrebe, die bevorzugt parallel zur vorderen Querstrebe orientiert ist, miteinander verbunden sind.

Die Anzahl der Befestigungspunkte für die Diagonalstreben und die Querstrebe an einem Gussknoten kann dadurch reduziert werden, dass sich die Querstrebe und die Diagonalstrebe einen Befestigungspunkt teilen, das heißt über einen gemeinsamen Befestigungspunkt mit dem Gussknoten verbunden sind. Einerseits erfolgt hierdurch eine zentrale Kraftein- bzw. -weiterleitung von dem Gussknoten in die angeschlossenen Streben, andererseits wird der Montageaufwand ebenso wie der erforderliche Bauraum reduziert, da an dem Gussknoten anstelle zweier Befestigungspunkte nur ein Befestigungspunkt erforderlich ist.

Die Erfindung wird nachfolgend anhand der in den Zeichnungen dargestellten Ausführungsbeispiele näher erläutert. Es zeigen:
- Figur 1: eine erste Ausführungsform eines erfindungsgemäßen Hilfsrahmens in Blickrichtung von unten;
- Figur 2: den Hilfsrahmen der Figur 1 in Blickrichtung von oben;
- Figur 3: den Hilfsrahmen der Figur 1 in der Seitenansicht;
- Figur 4: eine erste Ausführungsform eines Strebenkreuzes in der Draufsicht;
- Figur 5: das Strebenkreuz der Figur 1 in der Seitenansicht;
- Figur 6: eine weitere Ausführungsform eines Strebenkreuzes in der Draufsicht;
- Figur 7: einen Endabschnitt einer Diagonalstrebe in der Draufsicht und
- Figur 8: den Endabschnitt der Figur 7 in perspektivischer Darstellung.

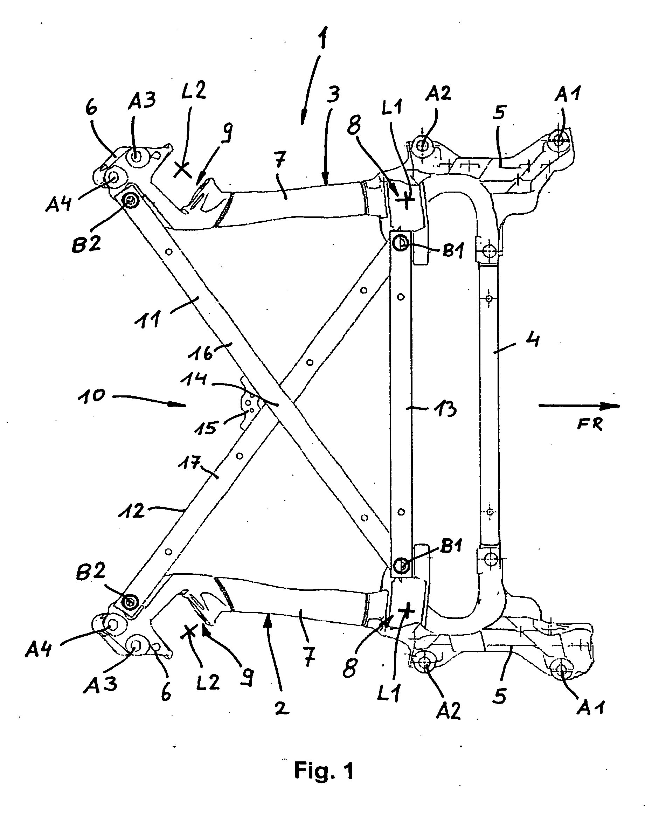

Figur 1 zeigt einen Hilfsrahmen 1, der für den Vorderbereich eines nicht näher dargestellten Kraftfahrzeugs vorgesehen ist und zur Aufnahme von ebenfalls nicht näher dargestellten Komponenten des Fahrwerks und/oder des Antriebsaggregats dient. Dieser Hilfsrahmen 1 setzt sich zusammen aus zwei im wesentlichen in Fahrtrichtung FR verlaufenden linken und rechten Längsträgern 2, 3, die über einen Querträger 4 miteinander verbunden sind. Die Längsträger 2, 3 sind spiegelsymmetrisch aufgebaut und setzen sich jeweils aus einem vorderen und einem hinteren Gussknoten 5, 6 und einem die Gussknoten 5, 6 verbindenden Rohrprofil 7 zusammen. An dem vorderen Gussknoten 5 ist eine vordere Lenkeranbindung 8 ausgebildet. Eine hintere Lenkeranbindung 9 befindet sich an dem hinteren Gussknoten 6.

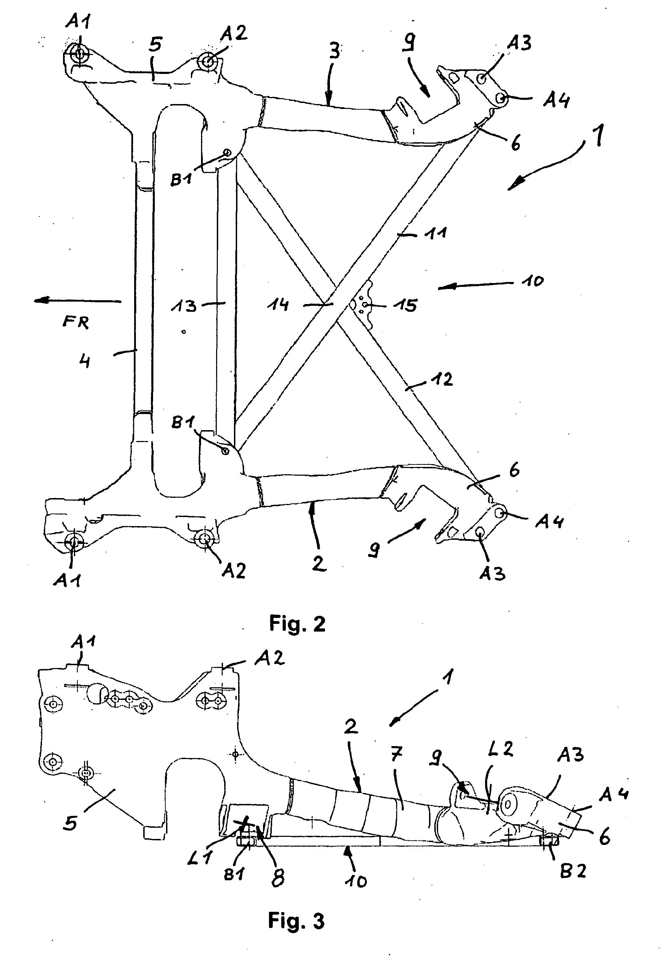

Wesentlich bei dem erfindungsgemäßen Hilfsrahmen 1 ist ein zusätzlich zu dem Querträger 4 vorgesehenes Strebenkreuz 10, das als eigenständige Baueinheit lösbar an den Längsträgern 2, 3 des Hilfsrahmens 1 befestigt wird. Das Strebenkreuz 10 setzt sich zusammen aus zwei geraden, langgestreckten Diagonalstreben 11, 12 und einer Querstrebe 13. Die Diagonalstreben 11, 12 verbinden die vorderen und hinteren Gussknoten 5, 6 der sich gegenüber liegenden Längsträger 2, 3 miteinander. Wesentlich ist hierbei die Positionierung der Befestigungspunkte der einzelnen Diagonalstreben 11, 12 bzw. der Querstrebe 13. Bei dem erfindungsgemäßen Hilfsrahmen 1 wird eine hohe Quersteifigkeit dadurch erreicht, dass die Diagonalstreben 11, 12 wie auch die Querstrebe 13 in der Nähe der Lasteinleitungspunkte L1 der vorderen Lenkeranbindungen 8 befestigt sind. Die entsprechenden Befestigungspunkte B1 sowohl der Diagonalstreben 11, 12 als auch der Querstrebe 13 liegen in Fahrtrichtung gesehen auf etwa gleicher Höhe wie der Lasteinleitungspunkt L1, so dass durch nicht näher dargestellte Lenker auf den vorderen Gussknoten 5 eingeprägte Kräfte unmittelbar in die angeschlossenen Diagonalstreben 11, 12 und die Querstrebe 13 eingeleitet werden. Hierbei ist zu beachten, dass Anschraubpunkte A1, A2 des vorderen Gussknotens 5 in relativ großem Abstand zum Lasteinleitungspunkt L1 liegen. In der Darstellung der Figur 1 entsteht der Eindruck, dass die Anschraubpunkte A1, A2 in der gleichen räumlichen Ebene liegen wie der Lasteinleitungspunkt L1, allerdings befinden sich die genannten Punkte in unterschiedlichen Höhenlagen, wie Figur 3 zeigt. Die Anschraubpunkte A1, A2 sind zur Befestigung des Hilfsrahmens an der Karosserie vorgesehen, das heißt sie liegen wesentlich höher als der Lasteinleitungspunkt L1 der vorderen Lenkeranbindung 8. Ohne das zusätzliche Strebenkreuz 10 würde der Gussknoten 5 bzw. der gesamte Längsträger 2, 3 einer erheblichen Momentenbelastung unterliegen. Diese Biegemomente können vorteilhaft durch das zusätzliche Strebenkreuz 10 aufgefangen werden, so dass Spannungsspitzen innerhalb der Gussknoten 5, 6 reduziert werden. Aufgrund der Tatsache, dass die vordere Lenkeranbindung 8 in Fahrtrichtung gesehen hinter den Anschraubpunkten A1, A2 des vorderen Gussknotens 5 liegt, befindet sich auch der Befestigungspunkt B1 für die Diagonalstreben 11, 12 bzw. die Querstrebe 13 hinter den Anschraubpunkten A1 und A2.

Im Bereich des hinteren Gussknotens 6 sind ebenfalls zwei Anschraubpunkte A3, A4 vorgesehen, die in Fahrtrichtung FR gesehen hinter der hinteren Lenkeranbindung 9 platziert sind. Bei dem erfindungsgemäßen Hilfsrahmen ist vorgesehen, den hinteren Befestigungspunkt B2 der Diagonalstreben 11, 12 so nah wie möglich an den hinteren Anschraubpunkten A3, A4 des Gussknotens 6 zu platzieren, so dass die im Lasteinleitungspunkt L2 der hinteren Lenkeranbindung 9 angreifenden Kraft so wenig wie möglich über die Anschraubpunkte A3 und A4 in die Karosserie eingeleitet werden, sondern unmittelbar über den Befestigungspunkt B2 auf die angeschlossene Diagonalstrebe 11, 12 übertragen werden. Daher befindet sich der Befestigungspunkt B2 in Fahrtrichtung gesehen zwischen den Anschraubpunkten A3 und A4. In Fahrzeugquerrichtung können die Befestigungspunkte B1 und B2 gegenüber den Anschraubpunkten A1, A2, A3, A4 durchaus versetzt angeordnet sein, wobei die Anschraubpunkte A1, A2, A3, A4 sowohl beim vorderen als auch beim hinteren Gussknoten 5, 6 in Fahrzeugquerrichtung weiter außen liegen als die Befestigungspunkte B1, B2 des Strebenkreuzes. Grundsätzlich liegen die Anschraubpunkte A1, A2, A3, A4 in Fahrzeughochrichtung betrachtet auch höher als die Befestigungspunkte B1, B2 des Strebenkreuzes 10, da das Strebenkreuz 10 im Wesentlichen an der Unterseite des Hilfsrahmens 1 befestigt ist. Darüber hinaus ist anhand der Figur 1 auch zu erkennen, dass der Abstand der Befestigungspunkte B1 am vorderen Gussknoten 5 kleiner ist als der Abstand der Befestigungspunkte B2 am hinteren Gussknoten 6.

Das Strebenkreuz 10 ist im Kreuzungspunkt 14 mit einem Knotenelement 15 versehen. Das Knotenelement 15 ist in diesem Ausführungsbeispiel V-förmig konfiguriert und ist lediglich auf der dem Querträger 4 abgewandten Seite angeordnet. Das Knotenelement 15 verbindet gewissermaßen die hinteren Strebenabschnitte 16, 17, die sich jeweils von den hinteren Gussknoten 6 bis zum Kreuzungspunkt 14 erstrecken.

Figur 2 zeigt den Hilfsrahmen in Blickrichtung von oben. Aus dieser Perspektive wird deutlich, dass das Strebenkreuz 10 im Wesentlichen an der Unterseite des Hilfsrahmens 1 positioniert ist. Das Strebenkreuz 10 der Figuren 1 und 2 ist als Detail Gegenstand der Figur 3. Figur 3 zeigt das Strebenkreuz 10 in der Ansicht von unten. Die Diagonalstreben 11, 12 sind jeweils gleich lang und zudem länger als die Querstrebe 13. Sämtliche Streben des Strebenkreuzes 10 sind bezogen auf die Länge relativ schlank ausgebildet und insbesondere gerade, wobei auch keine Abknickungen senkrecht zu der Bildebene vorgesehen sind. Dadurch wird das Material des Strebenkreuzes 10 so wenig wie möglich auf Biegung belastet. Spannungsspitzen innerhalb des Strebenkreuzes 10 sollen dadurch weitestgehend vermieden werden mit dem Ziel, den Materialeinsatz zu minimieren.

Grundsätzlich kann es sich bei dem Strebenkreuz 10 um eine Schweißkonstruktion aus metallischem Werkstoff handeln. Denkbar ist aber auch der Einsatz von geeigneten Kunststoffen oder auch Hybridmaterialien. Entscheidend ist letztendlich das optimale Verhältnis zwischen Belastbarkeit, Gewicht und Dauerhaltbarkeit des eingesetzten Werkstoffes unter Berücksichtigung der Herstellungsverfahren und selbstverständlich der Werkstoffkosten.

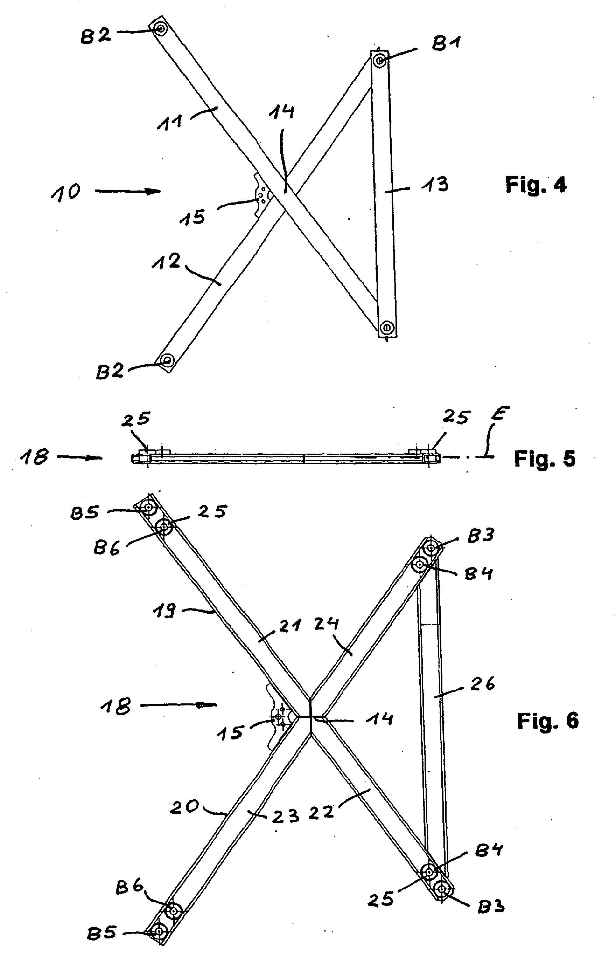

Während das Strebenkreuz 10 der Figuren 1 bis 4 zwischen den Befestigungspunkten B1 und B2 durchgängige Diagonalstreben 11, 12 aufweist, die im Bereich des Kreuzungspunkts 14 mit entsprechenden Aussparungen versehen sind um die Bauhöhe im Kreuzungspunkt zu minimieren, ist bei der Ausführungsform des Strebenkreuzes 18 der Figuren 5 und 6 vorgesehen, dass dessen Diagonalstreben 19, 20 aus einzelnen Strebenabschnitten 21, 22, 23, 24 zusammengesetzt sind, die sich auf gleicher Höhe im Bereich des Kreuzungspunktes 14 treffen und hier miteinander verschweißt sind. Wie aus der Seitenansicht der Figur 5 deutlich wird, hat diese Ausführungsform den Vorteil, dass das verwendete rohrförmige Rechteckprofil im Bereich des Kreuzungspunkts nicht ausgefacht werden muss, sondern durch entsprechende Schnittführung so miteinander verschweißt werden kann, dass es zu keiner Materialschwächung der Diagonalstreben 19, 20 kommt. Auch bei dieser Ausführungsform ist ein zusätzliches Knotenelement 15 vorgesehen, das sich räumlich ebenfalls in der von den Diagonalstreben 19, 20 aufgespannten Ebene E befindet.

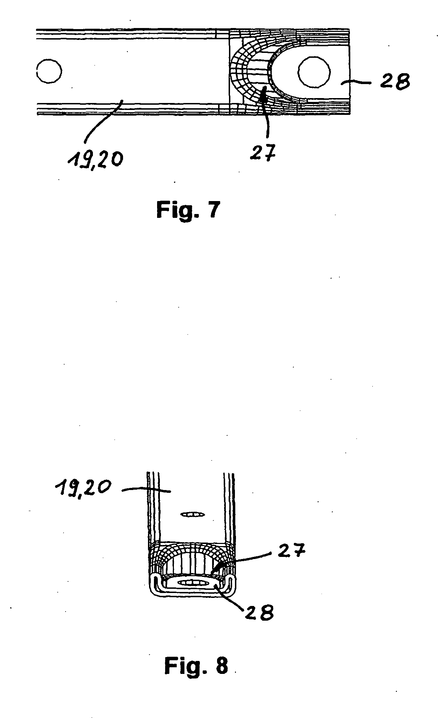

Im Unterschied zu der Ausführungsform der Figur 4 sind bei diesem Strebenkreuz 18 an den Enden der Diagonalstreben 19, 20 jeweils zwei in Längsrichtung der Diagonalstreben 19, 20 zueinander versetzt angeordnete Befestigungspunkte B3, B4, B5, B6 vorgesehen. Die Befestigungspunkte B1-B6 sind jeweils durch Lagerhülsen 25 gebildet, die quer zur Längsrichtung der Diagonalstreben 19 in diese eingesetzt sind und zur Aufnahme von Schraubbolzen dienen. Alternativ zu den Lagerhülsen 25 können die Diagonalstreben 19, 20 an ihren Enden auch Verprägungen 27 aufweisen, die einen Montageflansch 28 zur Anbringung eines weiteren Bauteils, ausbilden. Ein solcher Montageflansch 28 dient als ebene, stabile Auflagefläche an denen ein weiteres Bauteil z.B. über Schraubbolzen angebracht werden kann (Figuren 7 und 8). Wie bei der Ausführungsform der Figur 4 wird auch bei der Ausführungsform der Figur 5 die Querstrebe 26 über die Befestigungspunkte B3, B4 an den Enden der Diagonalstreben 19, 20 fixiert, wobei die Querstrebe 26 selbst nicht bis zu den Befestigungspunkten B3 und B4 reicht, sondern vielmehr außenseitig an den Strebenabschnitten 22, 24 der Diagonalstreben 19, 20 angeschweißt ist. Wichtig hierbei ist, dass beide Diagonalstreben 19, 20 und auch die Querstrebe 26 in einer gemeinsamen Ebene E liegen und daher nur minimalen Bauraum hinsichtlich der Höhe beanspruchen.

### Bezugszeichen:

- 1 -: Hilfsrahmen
- 2 -: linker Längsträger
- 3 -: rechter Längsträger
- 4 -: Querträger
- 5 -: vorderer Gussknoten
- 6 -: hinterer Gussknoten
- 7 -: Rohrprofil
- 8 -: vordere Lenkeranbindung
- 9 -: hintere Lenkeranbindung
- 10 -: Streben kreuz
- 11 -: Diagonalstrebe v. 10
- 12 -: Diagonalstrebe v. 10
- 13 -: Querstrebe
- 14 -: Kreuzungspunkt v. 11, 12
- 15 -: Knotenelement
- 16 -: Strebenabschnitt v. 11
- 17 -: Strebenabschnitt v. 12
- 18 -: Strebenkreuz
- 19 -: Diagonalstrebe v. 18
- 20 -: Diagonalstrebe v. 18
- 21 -: Strebenabschnitt v. 19
- 22 -: Strebenabschnitt v. 19
- 23 -: Strebenabschnitt v. 20
- 24 -: Strebenabschnitt v. 20
- 25 -: Lagerhülse
- 26 -: Querstrebe
- 27 -: Verprägung
- 28 -: Montageflansch

- A1 -: Anschraubpunkt
- A2 -: Anschraubpunkt
- A3 -: Anschraubpunkt
- A4 -: Anschraubpunkt
- B1 -: Befestigungspunkt
- B2 -: Befestigungspunkt
- B3 -: Befestigungspunkt
- B4 -: Befestigungspunkt
- E -: Ebene
- FR -: Fahrtrichtung
- L1 -: Lasteinleitungspunkt
- L2 -: Lasteinleitungspunkt

## Patentansprüche

1. Hilfsrahmen für ein Kraftfahrzeug zur Aufnahme von Komponenten des Fahrwerks und/oder des Antriebsaggregats des Kraftfahrzeugs, mit im Wesentlichen in Fahrtrichtung (FR) verlaufenden linken und rechten Längsträgern (2, 3) und mit einem die Längsträger (2, 3) verbindenden Querträger (4), wobei jeder Längsträger (2, 3) in Fahrtrichtung (FR) hinter dem Querträger (4) angeordnet eine vordere Lenkeranbindung (8) und eine hintere Lenkeranbindung (9) aufweist, wobei die Längsträger (2, 3) über ein Strebenkreuz (10, 18) miteinander verbunden sind, wobei die sich kreuzenden Diagonalstreben (11, 12; 19, 20) des Strebenkreuzes (10, 18) bezogen auf die Fahrtrichtung (FR) in der Höhe der vorderen Lenkeranbindungen (8) mit den Längsträgern (2, 3) verbunden sind **dadurch gekennzeichnet, dass** die Diagonalstreben (11, 12, 19, 20) bezogen auf die Fahrtrichtung (FR) hinter den hinteren Lenkeranbindungen (9) mit den jeweils gegenüberliegenden Längsträgern (2, 3) verbunden sind.

2. Hilfsrahmen nach Anspruch 1, **dadurch gekennzeichnet, dass** jeder Längsträger (2, 3) einen vorderen Gussknoten (5) mit der vorderen Lenkeranbindung (8) und einen hinteren Gussknoten (6) mit der hinteren Lenkeranbindung (9) aufweist, wobei an dem hinteren Gussknoten (6) zwei Anschraubpunkte (A3, A4) zur Befestigung des Hilfsrahmens (1) an einem Fahrzeuglängsträger angeordnet sind, wobei die Anschraubpunkte (A3, A4) in Fahrtrichtung (FR) zueinander versetzt sind und wobei ein Befestigungspunkt (B2) der Diagonalstreben (11, 12) in Fahrtrichtung (FR) gesehen zwischen den Anschraubpunkten (A3, A4) liegt.

3. Hilfsrahmen nach Anspruch 1 oder 2, **dadurch gekennzeichnet, dass** jeder Längsträger (2, 3) einen vorderen Gussknoten (5) mit der vorderen Lenkeranbindung (8) und einen hinteren Gussknoten (6) mit der hinteren Lenkeranbindung (9) aufweist, wobei an dem vorderen Gussknoten (5) zwei Anschraubpunkte (A1, A2) zur Befestigung des Hilfsrahmens (1) an einem Fahrzeuglängsträger angeordnet sind, wobei die Anschraubpunkte (A1, A2) in Fahrtrichtung (FR) zueinander versetzt sind und wobei ein Befestigungspunkt (B1) der Diagonalstreben (11, 12) in Fahrtrichtung (FR) gesehen hinter den Anschraubpunkten (A1, A2) liegt.

4. Hilfsrahmen nach einem der Ansprüche 1 bis 3, **dadurch gekennzeichnet, dass** das Strebenkreuz (10, 18) eine Querstrebe (23, 26) umfasst, die in Fahrtrichtung (FR) gesehen in der Höhe der der vorderen Lenkeranbindung (9) parallel zum Querträger (4) verläuft.

5. Hilfsrahmen nach einem der Ansprüche 1 bis 4, **dadurch gekennzeichnet, dass** das Strebenkreuz (10, 18) eine weitere Querstrebe umfasst, die sich zwischen den hinteren Gussknoten (6) erstreckt.

6. Hilfsrahmen nach einem der Ansprüche 1 bis 5, **dadurch gekennzeichnet, dass** die Diagonalstreben (11, 12; 19, 20) in einer Ebene (E) verlaufen.

7. Hilfsrahmen nach Anspruch 6, **dadurch gekennzeichnet, dass** die Diagonalstreben (11, 12; 19, 20) und die Querstreben (23, 26) in einer Ebene (E) verlaufen

8. Hilfsrahmen nach einem der Ansprüche 1 bis 7, **dadurch gekennzeichnet, dass** die Befestigungspunkte (B1) der Diagonalstreben (11, 12; 19, 20) an den vorderen Gussknoten (5) in Fahrzeugquerrichtung einen geringeren Abstand haben als die Befestigungspunkte (B2) an den hinteren Gussknoten (6).

9. Hilfsrahmen nach einem der Ansprüche 1 bis 8, **dadurch gekennzeichnet, dass** die Diagonalstreben (11, 12; 19, 20) als Hohlprofile ausgebildet sind.

10. Hilfsrahmen nach einem der Ansprüche 1 bis 9, **dadurch gekennzeichnet, dass** die Diagonalstreben (11, 12) in Schalenbauweise ausgebildet sind.

11. Hilfsrahmen nach einem der Ansprüche 1 bis 10, **dadurch gekennzeichnet, dass** die Diagonalstreben (11, 12; 19, 20) im Kreuzungspunkt (14) über ein Knotenelement (15) ausgesteift sind.

12. Hilfsrahmen nach einem der Ansprüche 4 bis 11, **dadurch gekennzeichnet, dass** die Diagonalstreben (11, 12; 19, 20) und die Querstreben (13, 26) gemeinsame Befestigungspunkte (B1, B3, B4) besitzen.

13. Hilfsrahmen nach einem der Ansprüche 1 bis 12, **dadurch gekennzeichnet, dass** die Diagonalstreben (19, 20) an wenigstens einem Gussknoten über zwei Befestigungspunkte (B3, B4, B5, B6) befestigt sind.

14. Hilfsrahmen nach einem der Ansprüche 1 bis 13, **dadurch gekennzeichnet, dass** die Diagonalstreben (19, 20) in einen vorderen Strebenabschnitt (22, 24) und einen hinteren Strebenabschnitt (21, 23) gegliedert sind, wobei die Strebenabschnitte (21-24) im Kreuzungspunkt (14) der Diagonalstreben (19, 20) miteinander verschweißt sind.

15. Hilfsrahmen nach einem der Ansprüche 4 bis 14, **dadurch gekennzeichnet, dass** die Querstreben (26) mit den Diagonalstreben (19, 20) verschweißt ist.

16. Hilfsrahmen nach einem der Ansprüche 1 bis 15, **dadurch gekennzeichnet, dass** die Diagonalstreben (19, 20) an ihren Befestigungspunkten (B1-B6) Lagerhülsen (25) aufweisen.

17. Hilfsrahmen nach einem der Ansprüche 1 bis 15, **dadurch gekennzeichnet, dass** die Diagonalstreben (19, 20) an ihren Enden im Bereich ihrer Befestigungspunkte (B1-B6) Verprägungen (27) aufweisen, die einen Montageflansch (28) ausbilden.

18. Hilfsrahmen nach einem der Ansprüche 1 bis 17, **dadurch gekennzeichnet, dass** der vordere und der hintere Gussknoten (5, 6) durch ein Rohrprofil (7) miteinander verbunden sind.

## Claims

1. Subframe for a motor vehicle for accommodating components of the chassis and/or of the drive assembly of the motor vehicle, with left and right longitudinal beams (2, 3) running substantially in the direction of travel (FR) and with a transverse beam (4) connecting the longitudinal beams (2, 3), wherein each longitudinal beam (2, 3) has, arranged downstream of the transverse beam (4) in the direction of travel (FR), a front control arm connection (8) and a rear control arm connection (9), wherein the longitudinal beams (2, 3) are connected to one another via a cross strut (10, 18), wherein the diagonal struts (11, 12; 19, 20), which cross one another, of the cross strut (10, 18) are connected to the longitudinal beams (2, 3) at the height of the front control arm connections (8) relative to the direction of travel (FR), **characterised in that** the diagonal struts (11, 12; 19, 20) are connected to the respectively opposite longitudinal beams (2, 3) downstream of the rear control arm connections (9) relative to the direction of travel (FR).

2. Subframe according to Claim 1, **characterised in that** each longitudinal beam (2, 3) has a front cast node (5) with the front control arm connection (8) and a rear cast node (6) with the rear control arm connection (9), wherein two screw-on points (A3, A4) for fastening the subframe (1) on a vehicle longitudinal beam are arranged at the rear cast node (6), wherein the screw-on points (A3, A4) are offset to one another in the direction of travel (FR) and wherein a fastening point (B2) of the diagonal struts (11, 12) lies between the screw-on points (A3, A4) as seen in the direction of travel (FR).

3. Subframe according to Claim 1 or 2, **characterised in that** each longitudinal beam (2, 3) has a front cast node (5) with the front control arm connection (8) and a rear cast node (6) with the rear control arm connection (9), wherein two screw-on points (A1, A2) for fastening the subframe (1) on a vehicle longitudinal beam are arranged at the front cast node (5), wherein the screw-on points (A1, A2) are offset to one another in the direction of travel (FR) and wherein a fastening point (B1) of the diagonal struts (11, 12) lies downstream of the screw-on points (A1, A2) as seen in the direction of travel (FR).

4. Subframe according to one of Claims 1 to 3, **characterised in that** the cross struts (10, 18) encompasses a transverse strut (23, 26) which runs parallel to the transverse beam (4) at the height of the front control arm connection (9) as seen in the direction of travel (FR).

5. Subframe according to one of Claims 1 to 4, **characterised in that** the cross struts (10, 18) encompasses a further transverse strut which extends between the rear cast nodes (6).

6. Subframe according to one of Claims 1 to 5, **characterised in that** the diagonal struts (11, 12; 19, 20) run in a plane (E).

7. Subframe according to Claim 6, **characterised in that** the diagonal struts (11, 12; 19, 20) and the transverse struts (23, 26) run in a plane (E).

8. Subframe according to one of Claims 1 to 7, **characterised in that** the fastening points (B1) of the diagonal struts (11, 12; 19, 20) have a smaller spacing at the front cast nodes (5) in the transverse direction of the vehicle than the fastening points (B2) at the rear cast nodes (6).

9. Subframe according to one of Claims 1 to 8, **characterised in that** the diagonal struts (11, 12; 19, 20) are formed as hollow profiles.

10. Subframe according to one of Claims 1 to 9, **characterised in that** the diagonal struts (11, 12) are formed as a monocoque construction.

11. Subframe according to one of Claims 1 to 10, **characterised in that** the diagonal struts (11, 12; 19, 20) are rigidified at the point of intersection (14) by means of a node element (15).

12. Subframe according to one of Claims 4 to 11, **characterised in that** the diagonal struts (11, 12; 19, 20) and the transverse struts (13, 26) possess common fastening points (B1, B3, B4).

13. Subframe according to one of Claims 1 to 12, **characterised in that** the diagonal struts (19, 20) are fastened on at least one cast node by means of two fastening points (B3, B4, B5, B6).

14. Subframe according to one of Claims 1 to 13, **characterised in that** the diagonal struts (19, 20) are divided into a front strut portion (22, 24) and a rear strut portion (21, 23), wherein the strut portions (21-24) are welded to one another at the point of intersection (14) of the diagonal struts (19, 20).

15. Subframe according to one of Claims 4 to 14, **characterised in that** the transverse struts (26) are welded to the diagonal struts (19, 20).

16. Subframe according to one of Claims 1 to 15, **characterised in that** the diagonal struts (19, 20) have bearing sleeves (25) at their fastening points (B1-B6).

17. Subframe according to one of Claims 1 to 15, **characterised in that** the diagonal struts (19, 20) have corrugations (27) at their ends in the region of their fastening points (B1-B6), which corrugations (27) form a mounting flange (28).

18. Subframe according to one of Claims 1 to 17, **characterised in that** the front and the rear cast nodes (5, 6).are connected to one another by a tubular profile (7).

## Revendications

1. Cadre auxiliaire de véhicule automobile destiné à recevoir des composants du châssis et/ou du groupe d'entraînement du véhicule automobile, avec des longerons gauche et droit (2, 3) s'étendant essentiellement dans le sens de la marche (FR) et avec une traverse (4) reliant les longerons (2, 3), chaque longeron (2, 3) agencé derrière la traverse (4) dans le sens de la marche (FR) présentant un raccord pour bras oscillant avant (8) et un raccord pour bras oscillant arrière (9), les longerons (2, 3) étant reliés l'un à l'autre par le biais d'une entretoise en croix (10 ; 18), les entretoises diagonales (11, 12 ; 19, 20) qui se croisent des entretoises en croix (10 ; 18) étant reliées aux longerons (2, 3) à la hauteur des raccords pour bras oscillant avant (8) par rapport au sens de la marche (FR), **caractérisé en ce que** les entretoises diagonales (11, 12 ; 19, 20) sont reliées aux longerons (2, 3) respectivement opposés derrière les raccords pour bras oscillant arrière (9) par rapport au sens de la marche (FR).

2. Cadre auxiliaire selon la revendication 1, **caractérisé en ce que** chaque longeron (2, 3) présente un noeud en fonte avant (5) avec le raccord pour bras oscillant avant (8) et un noeud en fonte arrière (6) avec le raccord pour bras oscillant arrière (9), deux points de vissage (A3, A4) étant agencés au niveau du noeud en fonte arrière (6) pour fixer le cadre auxiliaire (1) sur un longeron du véhicule, les points de vissage (A3, A4) étant décalés l'un par rapport à l'autre dans le sens de la marche (FR) et un point de fixation (B2) des entretoises diagonales (11, 12) se trouvant entre les points de vissage (A3, A4) vu dans le sens de la marche (FR).

3. Cadre auxiliaire selon la revendication 1 ou 2, **caractérisé en ce que** chaque longeron (2, 3) présente un noeud en fonte avant (5) avec le raccord pour bras oscillant avant (8) et un noeud en fonte arrière (6) avec le raccord pour bras oscillant arrière (9), deux points de vissage (A1, A2) étant agencés au niveau du noeud en fonte avant (5) pour fixer le cadre auxiliaire (1) sur un longeron du véhicule, les points de vissage (A1, A2) étant décalés l'un par rapport à l'autre dans le sens de la marche (FR) et un point de fixation (B1) des entretoises diagonales (11, 12) se trouvant derrière les points de vissage (A1, A2) vu dans le sens de la marche (FR).

4. Cadre auxiliaire selon l'une quelconque des revendications 1 à 3, **caractérisé en ce que** les entretoises en croix (10 ; 18) comprennent une entretoise transversale (13 ; 26) qui s'étend parallèlement à la traverse (4) à la hauteur du raccord pour bras oscillant avant (9) vu dans le sens de la marche (FR).

5. Cadre auxiliaire selon l'une quelconque des revendications 1 à 4, **caractérisé en ce que** les entretoises en croix (10 ; 18) comprennent une autre entretoise transversale qui s'étend entre les noeuds en fonte arrière (6).

6. Cadre auxiliaire selon l'une quelconque des revendications 1 à 5, **caractérisé en ce que** les entretoises diagonales (11, 12 ; 19, 20) s'étendent dans un plan (E).

7. Cadre auxiliaire selon la revendication 6, **caractérisé en ce que** les entretoises diagonales (11, 12 ; 19, 20) et les entretoises transversales (13 ; 26) s'étendent dans un plan (E).

8. Cadre auxiliaire selon l'une quelconque des revendications 1 à 7, **caractérisé en ce que** les points de fixation (B1) des entretoises diagonales (11, 12 ; 19, 20) au niveau des noeuds en fonte avant (5) ont dans le sens transversal du véhicule une distance plus faible que les points de fixation (B2) au niveau des noeuds en fonte arrière (6).

9. Cadre auxiliaire selon l'une quelconque des revendications 1 à 8, **caractérisé en ce que** les entretoises diagonales (11, 12 ; 19, 20) sont réalisées sous forme de profilés creux.

10. Cadre auxiliaire selon l'une quelconque des revendications 1 à 9, **caractérisé en ce que** les entretoises diagonales (11, 12) sont réalisées en construction monocoque.

11. Cadre auxiliaire selon l'une quelconque des revendications 1 à 10, **caractérisé en ce que** les entretoises diagonales (11, 12 ; 19, 20) sont renforcées au point de croisement (14) par le biais d'un élément nodal (15).

12. Cadre auxiliaire selon l'une quelconque des revendications 4 à 11, **caractérisé en ce que** les entretoises diagonales (11, 12 ; 19, 20) et les entretoises transversales (13, 26) disposent de points de fixation communs (B1, B3, B4).

13. Cadre auxiliaire selon l'une quelconque des revendications 1 à 12, **caractérisé en ce que** les entretoises diagonales (19, 20) sont fixées à au moins un noeud en fonte par le biais de deux points de fixation (B3, B4, B5, B6).

14. Cadre auxiliaire selon l'une quelconque des revendications 1 à 13, **caractérisé en ce que** les entretoises diagonales (19, 20) se divisent en une section d'entretoise avant (22, 24) et une section d'entretoise arrière (21, 23), les sections d'entretoise (21 - 24) étant soudées l'une à l'autre au point de croisement (14) des entretoises diagonales (19, 20).

15. Cadre auxiliaire selon l'une quelconque des revendications 4 à 14, **caractérisé en ce que** l'entretoise transversale (26) est soudée avec les entretoises diagonales (19, 20).

16. Cadre auxiliaire selon l'une quelconque des revendications 1 à 15, **caractérisé en ce que** les entretoises diagonales (19, 20) présentent des douilles (25) au niveau de leurs points de fixation (B1 - B6).

17. Cadre auxiliaire selon l'une quelconque des revendications 1 à 15, **caractérisé en ce que** les entretoises diagonales (19, 20) présentent à leurs extrémités au niveau de leurs points de fixation (B1 - B6) des estampages (27), qui forment une bride de montage (28).

18. Cadre auxiliaire selon l'une quelconque des revendications 1 à 17, **caractérisé en ce que** le noeud en fonte avant et le noeud en fonte arrière (5, 6) sont reliés l'un à l'autre par le biais d'un profilé tubulaire (7).
